# EUROPEAN PATENT APPLICATION

(11) **EP 4 576 254 A1**
(43) Date of publication of application: **25.06.2025**
(21) Application number: 23219015.7
(22) Date of filing: 21.12.2023
(51) Int. Cl.: H01M 4/38, H01M 10/052, H01M 10/42, H01M 4/134, H01M 4/1395, H01M 4/02

(54) **LITHIUM METAL ANODE COMPRISING A PROTECTIVE LAYER**

(71) Applicant: Belenos Clean Power Holding AG, 2502 Bienne (CH)
(72) Inventor: GONZALEZ, José-Antonio, 1007 Lausanne (CH); STEFANCIC, Ale, 4313 Möhlin (CH); INGENITO, Andrea, 2000 Neuchâtel (CH); FU, Chengyin, 2000 Neuchâtel (CH); SROUT, Mohammed, 2000 Neuchâtel (CH); ROSPARS, Nicolas, 1007 Lausanne (CH)
(74) Representative: ICB SA

(57) **Abstract**

The present invention relates to a lithium metal anode (1, 10, 11) for a battery, comprising an anode active substrate (2) comprising an anode current collector (7) and a layer (8) substantially consisting of lithium metal provided on a surface (4) of the anode current collector (7), and a first lithium metal anode protective layer (3) provided on the layer (8) substantially consisting of lithium metal, characterized in that the first lithium metal anode protective layer (3) comprises lithium iodide (Lil) and lithium fluoride (LiF). The present invention further relates to methods of producing such lithium metal anodes.

## Description

### Technical field of the invention

The present invention relates a lithium metal anode for a lithium-ion battery, the anode comprising a protective layer. The invention further relates to lithium-ion batteries comprising such a lithium metal anode and to methods of producing them.

### Background

Rechargeable batteries have achieved remarkable success and commercialization in the past decades, as the most popular and reliable power sources for portable devices, electrical vehicles and energy storage stations. In particular, Li-ion batteries triumph over other battery systems on the market owing to their high energy density and outstanding cycle stability.

Lithium metal comprising anodes are well-known anodes for lithium-ion batteries because of the high theoretical capacity (3860 mAh/g) of lithium. However, the high (electro-)chemical reactivity and strong tendency to form lithium dendrites hinder its wide applications. Dendrites will grow on the anode's surface and pose a safety risk by potentially causing short circuits and battery failure.

Dendrites and dead lithium (i.e. lithium that has become inactive and does no longer take part in the electrochemical cycling) result from uneven lithium plating and stripping during charging and discharging cycles, which can be caused by a variety of reasons, such as mechanical stress, surface energy, structural defects, (electro-)chemical reactions. To reduce the risk of dendrite formation and dead lithium accumulation, and to increase the safety and lifetime of the batteries, several solutions have been investigated, including but not limited to the introduction of solid-state electrolytes, an artificial lithium metal host, adding additives to the electrolyte, and organic/inorganic passivation layers for liquid electrolyte-based batteries.

In particular lithium-ion conductive passivation layers, i.e. protective layers, such as artificial solid electrolyte interphase (SEI) coatings, have gained much interest. Although a natural SEI typically forms on the anode, it has proven to often be insufficient to prevent dendrite growth. Artificial SEI (a-SEI) layers act as barriers, inhibiting dendrite growth and providing a more stable surface for lithium deposition.

US2018/0294476 discloses a lithium secondary battery comprising as anode a foil or a coating of lithium or lithium alloy on a current collector, and a 1 nm - 10 µm thin layer of a high-elasticity ultrahigh molecular weight (UHMW) polymer having a lithium conductivity of at least 10⁻⁶ S/cm and a molecular weight between 0.5 * 10⁶ and 9 * 10⁶ g/mole.

A disadvantages of the foregoing UHMW polymer as protective layer is that it is not chemically stable in all types of liquid electrolytes, in particular in certain organic solvents used in liquid electrolytes, and is prone to swelling. A further disadvantage is that the repelling ability of the UHMW polymer for the solvent in the electrolyte lead to an unstable and variable ionic conductivity of the lithium ion in the electrolyte.

### Summary of the invention

It is an aim of the present invention to overcome one or more of the foregoing drawbacks. It is an aim of the present invention to provide a lithium metal anode having excellent electrochemical performance. It is a further aim to provide a lithium metal anode having an improved lifetime, when used in a battery, as compared to lithium metal anodes of the art. Yet another aim is to provide a lithium metal anode which, in use in a battery, is less prone to dendrite formation and/or to the accumulation of dead lithium, thereby offering an excellent performance in secondary batteries. It is a further aim to provide a lithium metal anode which is chemically and electrochemically stable.

It is a further aim of the present invention to provide a lithium-ion battery which has an improved lifetime, and which can resist a large number of charging/discharging cycles.

According to a first aspect of the present disclosure, there is provided a lithium metal anode for a battery as set out in the appended claims. The lithium metal anode comprises an anode active substrate and a first lithium metal anode protective layer provided on a surface of the anode active substrate.

The anode active substrate comprises an anode current collector and a layer substantially consisting of lithium metal provided on a surface of the anode current collector.

With "substantially consisting of lithium metal" is meant in the present disclosure that the layer comprises at least 50 %, preferably at least 75 %, more preferably at least 95 % of lithium metal. In other words, the layer comprises at most 50 %, preferably at most 25 %, more preferably at most 5 % of components, such as indium, magnesium, aluminium, zinc, silver, tin, silicon, antimony, bismuth, gold, sodium, copper as well as carbonates, oxides and hydroxides.

Advantageously, the first lithium metal anode protective layer is provided on the layer substantially consisting of lithium metal of the anode active substrate.

The first lithium metal anode protective layer comprises or substantially consists of lithium iodide (Lil) and lithium fluoride (LiF).

Advantageously, the weight ratio of the fluoride to the iodide in the first lithium metal anode protective layer is between 10:90 and 90:10, preferably between 30:70 and 70:30.

Advantageously, the first lithium metal anode protective layer has a thickness between 50 nm and 1000 nm, preferably between 75 nm and 750 nm, more preferably between 100 nm and 500 nm, such as between 150 nm and 300 nm, for example 200 nm.

Advantageously, the lithium metal anode comprises a matrix. Advantageously, the matrix comprises or substantially consists of LiF. Advantageously, at least a portion (e.g. at least 50 %, preferably at least 75 %, more preferably at least 90 %), and preferably all, of Lil is dispersed, i.e. embedded, in the matrix.

Advantageously, the matrix comprising or substantially consisting of LiF is porous, i.e. a porous matrix. Advantageously, at least a portion, and preferably all, of Lil is present in the pores of the porous matrix. The term "present in the pores" is used for being present at the wall surface of the pores and/or at least partially filling the pores.

Advantageously, the matrix comprises grains (i.e. particles). Advantageously, the grains (particles) comprise or substantially consist of LiF. Advantageously, the grains have an average diameter between 10 nm and 500 nm, preferably between 30 nm and 200 nm, more preferably between 40 nm and 150 nm, such as between 50 nm and 125 nm, as measured by scanning electron microscopy (SEM).

Advantageously, when the matrix comprises grains comprising or substantially consisting of LiF, Lil is at least partially present (i.e. at least a portion of Lil is present) on a portion of the surface of the grains.

When the matrix is porous and comprises grains, Lil is advantageously present on a portion of the surface of the grains and/or at least partially fills the pores between the grains, i.e. the pores of the porous matrix.

The lithium metal anode can comprise a further lithium metal anode protective layer. Advantageously, the (optional) further lithium metal anode protective layer comprises or substantially consists of Lil and/or LiF.

Advantageously, such a further lithium metal anode protective layer is provided on the first lithium metal anode protective layer. Alternatively or additionally, yet advantageously, such a further lithium metal anode protective layer is provided between the first lithium metal anode protective layer and the anode active substrate, in particular the layer substantially consisting of lithium metal of the anode active substrate.

According to a second aspect of the present disclosure, there is provided a lithium-ion battery as set out in the appended claims. Advantageously, the lithium-ion battery comprises the anode of the first aspect of the invention. Advantageously, the battery is a secondary battery.

According to a third aspect of the present disclosure, there is provided a method of producing a lithium metal anode as set out in the appended claims. Advantageously, the lithium metal anode is an anode for a battery.

Advantageously, the lithium metal anode is according to the first aspect of the invention. In other words, the lithium metal anode advantageously comprises an anode active substrate and a first lithium metal anode protective layer, wherein the anode active substrate and the first lithium metal anode protective layer are as described hereinabove, i.e. the first lithium metal anode protective layer comprises Lil and LiF and is provided on the surface of the layer substantially consisting of lithium metal of the anode active substrate.

The method comprises depositing a first lithium metal anode protective layer on a layer of an anode active substrate, the layer substantially consisting of lithium metal. The first lithium metal anode protective layer is deposited by means of simultaneous thermal evaporation of a first coating composition comprising or substantially consisting of LiF and a second coating composition comprising or substantially consisting of Lil.

Advantageously, the deposition rate ratio of the first coating composition to the second coating composition is between 1:10 and 20:1, preferably between 1:5 and 10:1, more preferably between 1:2 and 8:1, for example between 1:1 and 5:1.

With "deposition rate" of a coating composition is meant in the present invention the speed at which an evaporated substance or compound, such as LiF or Lil, condenses on the substrate to be coated, such as an anode active substrate. In the light of the present invention, the deposition rate is the thickness in Angstrom deposited in 1 second.

It follows that the deposition rate ratio of two substances (e.g. coating compositions) is the ratio of the deposition rate of one substance to the deposition rate of the other substance. In other words, a deposition rate ratio of 5:1 means that the thickness deposited in 1 second is 5 times larger for the first substance and for the second substance.

Advantageously, the first coating composition has a temperature between 600 °C and 800 °C, preferably between 650 °C and 750 °C during the simultaneous thermal evaporation.

Advantageously, the second coating composition has a temperature between 150 °C and 300 °C, preferably between 200 °C and 250 °C during the simultaneous thermal evaporation.

Advantageously, the anode active substrate has a temperature between 10 °C and 30 °C, preferably between 15 °C and 25 °C, more preferably room temperature, e.g. 20 °C, during the simultaneous thermal evaporation.

Advantageously, the anode active substrate is provided by depositing a layer substantially consisting of lithium metal on a surface of an anode current collector by means of techniques known in the field, in particular by means of one or more of pulsed laser deposition, vapour deposition and radio frequency (RF) sputtering.

Optionally, the method further comprises depositing a further lithium metal anode protective layer. Advantageously, the further lithium metal anode protective layer is deposited by means of thermal evaporation of a third coating composition comprising or substantially consisting of Lil or LiF. Optionally, the thermal evaporation is performed simultaneously with a thermal evaporation of a fourth coating composition comprising or substantially consisting of LiF or Lil.

In other words, when the deposition of the further lithium metal anode protective layer is performed by means of thermal evaporation of only a third coating composition comprising or substantially consisting of Lil or LiF, the further lithium metal anode protective layer that is obtained comprises or substantially consists of Lil or LiF. Alternatively, when the deposition of the further lithium metal anode protective layer is performed by means of simultaneous thermal evaporation of a third coating composition comprising or substantially consisting of Lil or LiF and a fourth coating composition comprising or substantially consisting of LiF or Lil, the further lithium metal anode protective layer that is obtained comprises or substantially consists of Lil and LiF.

Advantageously, the optional further lithium metal anode protective layer is deposited prior to depositing the first lithium metal anode protective layer. Alternatively or additionally, yet advantageously, the optional further lithium metal anode protective layer is deposited after depositing the first lithium metal anode protective layer.

Advantageously, when the optional third and/or the optional fourth coating composition comprises or substantially consists of Lil, the respective coating composition has a temperature between 250 °C and 400 °C, preferably between 275 °C and 375 °C, more preferably between 300 °C and 350 °C during the respective thermal evaporation thereof.

Advantageously, when the optional third and/or the optional fourth coating composition comprises or substantially consists of LiF, the respective coating composition has a temperature between 500 °C and 900 °C, preferably between 600 °C and 850 °C, more preferably between 700 °C and 800 °C during the respective thermal evaporation thereof.

Advantageously, the anode active substrate has a temperature between 10 °C and 30 °C, preferably between 15 °C and 25 °C, more preferably room temperature, e.g. 20 °C, during the thermal evaporation of the optional third and/or the optional fourth coating composition.

An advantage of a lithium metal anode protective layer comprising Lil and LiF is a more homogeneous lithium stripping and lithium plating, leading, in use, to battery cells having an improved lifetime.

An advantage of the LiF being present as a microstructure comprising grains having an average diameter between 10 nm and 150 nm is that the lithium ion conductivity of the protective layer is higher than the lithium ion conductivity of LiF alone, thereby contributing to a more functional anode, i.e. an anode that performs better when compared to the lithium metal anode of the art.

### Description of the figures

Aspects of the invention will now be described in more detail with reference to the appended drawings, wherein same reference numerals illustrate same features and wherein:
- Figures 1 - 4 schematically show lithium metal anodes according to the invention;
- Figures 5 - 8 show scanning electron microscopy (SEM) images of the surface of 4 anodes of the invention;
- Figures 9A, 9B and 9C show SEM images of the surface of 3 anodes of the invention after immersion in an organic solvent;
- Figures 10A, 10B and 10C show the particle size distribution of 3 anodes of the invention after immersion in an organic solvent;
- Figure 11 shows the specific discharge capacity in function of the number of charging/discharging cycles for 3 reference pouch cells and 1 pouch cell of the invention; and
- Figure 12 shows the specific discharge capacity in function of the number of charging/discharging cycles for 1 reference pouch cell and 6 pouch cells of the invention.

### Detailed description of the invention

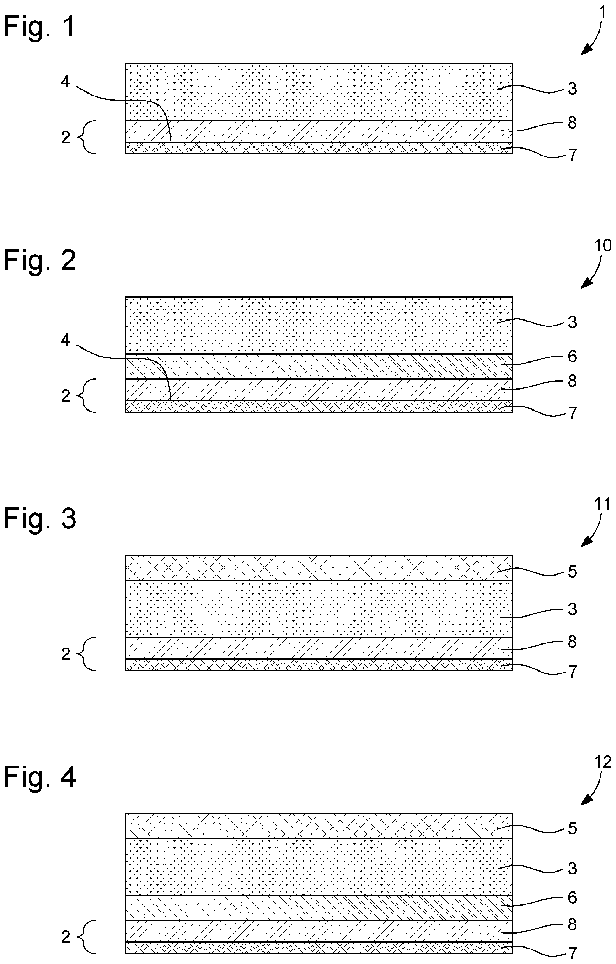

Fig. 1 shows a schematical representation of a lithium metal anode 1 of the invention. The anode 1 comprises an anode active substrate 2. The anode active substrate 2 comprises an anode current collector 7 and a layer 8 substantially consisting of lithium metal provided on a surface 4 of the anode current collector 7.

The anode current collector 7 can be any anode current collector known in the art, in particular for lithium-ion batteries. The layer 8 substantially consisting of lithium metal can be provided, e.g. deposited, on the anode current collector 7 by any technology in the art, preferably by means of pulsed laser deposition, vapour deposition or RF sputtering.

The anode 1 further comprises a first lithium metal anode protective layer 3, which is provided on (a surface of) the anode active substrate 2, in particular on (a surface of) the layer 8 substantially consisting of lithium metal opposite to the surface 4 thereof adjacent to, or contacting the anode current collector 7.

The first lithium metal anode protective layer 3 comprises or substantially consists of lithium iodide (Lil) and lithium fluoride (LiF).

It is known that Lil and LiF have a different lithium ion conductivity, about 10⁻⁷ S/cm and about 10⁻⁹ S/cm, respectively. However, the inventors have surprisingly discovered that the lithium ion conductivity of the first lithium metal anode protective layer 3 is higher than the lowest lithium ion conductivity, i.e. that of LiF (about 10⁻⁹ S/cm), contrary to what was expected.

Consequently, as the inventors discovered, the current density on the anode is more homogeneous than for anodes without such a protective layer, or with another type of protective layer. A more homogeneous current density in turn leads to a homogeneous lithium plating, and to an anode which can resist more lithium plating/stripping cycles. Consequently, batteries comprising this anode can resist a higher number of charging/discharging cycles, resulting in an improved lifetime.

A known phenomenon in lithium-ion batteries is the accumulation of dead lithium on the surface of the anode. This dead lithium is lithium that is lost from the electrodes (initially from the anode and after longer cycling also from the cathode), leading to a lower amount of lithium being available for plating and stripping, i.e. for charging and discharging the battery. This reduces the number of charging/discharging cycles that the battery cell can resist, and thus the lifetime of the battery.

The inventors have surprisingly discovered that when the protective layer comprises Lil and LiF, Lil will leach out of the protective layer and dissolve in the electrolyte. It is believed that this leaching and dissolution is realised because the solubility of Lil is higher than the solubility of LiF in organic solvents, in particular organic solvents typically used in liquid electrolytes of lithium-ion batteries (for example ethers). Consequently, the dissolved Lil can replenish the lithium lost in the cathode. It was found that a triiodide/iodide (I³⁻/I⁻) redox couple is formed on the cathode side, thereby mitigating the recovery of dead lithium. Dead lithium accumulated on anode side during cycling is converted into soluble Lil, which is diffused into the cathode. I³⁻ is regenerated at the cathode side while the cathode gets back into its lithiated state, thereby replenishing lithium ions from dead lithium.

This leaching and dissolution (of Lil) is in particular noticed when the lithium metal anode comprises a matrix comprising or substantially consisting of LiF, and wherein Lil is dispersed (i.e. embedded, or present) in the matrix.

In particular, when the matrix comprises or substantially consist of grains comprising or substantially consisting of LiF, and Lil is at least partially present on the surface of the grains, there is substantial leaching and dissolution of Lil. This results in yet an even better battery functioning. In other words, without wishing to be bound by any theory, there is a synergy between the structure or morphology of the first lithium metal anode protective layer, and the dissolution of Lil into the electrolyte, which results in a superior lithium-ion battery.

Advantageously, when the matrix comprises grains comprising or substantially consisting of LiF, the grains have an average diameter of at least 1 nm, preferably at least 5 nm, more preferably at least 10 nm, as measured by SEM. Advantageously, the grains have an average diameter of at most 750 nm, preferably at most 500 nm, more preferably at most 250 nm, as measured by SEM.

Advantageously, the weight ratio of the fluoride to the iodide (F:I weight ratio) in the first lithium metal anode protective layer 3 is between 10:90 and 90:10, preferably between 20:80 and 80:20, more preferably between 30:70 and 70:30, most preferably between 40:60 and 60:40, such as between 45:55 and 55:45, for example 50:50.

Fig. 2 shows a second anode 10 of the present invention. The difference between the anode 10 of Fig. 2 and the anode 1 of Fig. 1 is that the anode 10 of Fig. 2 further comprises a second lithium metal anode protective layer 6. The second lithium metal anode protective layer 6 is present between the first lithium metal anode protective layer 3 and the anode active substrate 2, in particular the layer 8 substantially consisting of lithium metal of the anode active substrate 2.

The second lithium metal anode protective layer 6 comprises or substantially consists of Lil and/or LiF.

When the second lithium metal anode protective layer 6 comprises or substantially consists of Lil and LiF, the layer is advantageously as described hereinabove for the first lithium metal anode protective layer 3. For example, the second lithium metal anode protective layer 6 can comprise or substantially consist of Lil and LiF, wherein the weight ratio of the fluoride to the iodide is different from the F:I weight ratio of the first lithium metal anode protective layer 3.

When the second lithium metal anode protective layer 6 comprises or substantially consists of Lil, i.e. without any LiF, the second lithium metal anode protective layer 6 advantageously has a thickness between 5 nm and 800 nm, preferably between 50 nm and 700 nm, more preferably between 100 nm and 500 nm.

When the second lithium metal anode protective layer 6 comprises or substantially consists of LiF, i.e. without any Lil, the second lithium metal anode protective layer 6 advantageously has a thickness between 50 nm and 200 nm, preferably between 75 nm and 175 nm, more preferably between 100 nm and 150 nm.

Advantageously, the total thickness of the lithium metal anode protective layers 3, 6, i.e. the sum of the thickness of the first 3 and the second 6 lithium metal anode protective layer, is between 5 nm and 2.5 µm, preferably between 10 nm and 2 µm, more preferably between 50 nm and 1.5 µm.

Fig. 3 shows a third anode 11 of the present invention. The difference between the anode 11 of Fig. 3 and the anode 1 of Fig. 1 is that the anode 11 of Fig. 3 further comprises a third lithium metal anode protective layer 5. The third lithium metal anode protective layer 5 is present on the first lithium metal anode protective layer 3.

The third lithium metal anode protective layer 5 comprises or substantially consists of Lil and/or LiF.

Advantageously, the third lithium metal anode protective layer 5 is as described hereinabove for the second lithium metal anode protective layer 6, wherein the difference is the position of the lithium metal anode protective layer in the anode.

Fig. 4 shows a further anode 12 of the present invention. The anode 12 of Fig. 4 comprises both the second lithium metal anode protective layer 6 of the anode 10 of Fig. 2 and the third lithium metal anode protective layer 5 of the anode 11 of Fig. 3.

Advantageously, the total thickness of the lithium metal anode protective layers 3, 5, 6, i.e. the sum of the thickness of the first 3, the second 6 and the third 5 lithium metal anode protective layer, is between 5 nm and 2.5 µm, preferably between 10 nm and 2 µm, more preferably between 50 nm and 1.5 µm.

The present invention further relates to batteries, in particular lithium-ion batteries, comprising the inventive anodes. Advantageously, the (lithium-ion) battery is a secondary (lithium-ion) battery.

The battery further comprises a cathode. The cathode can be any cathode known in the field. Advantageously, the cathode comprises a cathode current collector, which can be any cathode current collector known in the field, and a cathode active material. Non-limiting examples of cathode active materials include vanadates, such as H₂V₃O₈, NMC and LiFePO₄ (LFP).

The battery further comprises an electrolyte. The electrolyte can be a liquid electrolyte or a solid electrolyte. The electrolyte can be any electrolyte known in the art, such as the liquid electrolyte comprising Lithium Bis(fluorosulfonyl)imide (LiFSI) in dimethoxyethane (DME), for example a 2 M LiFSI in DME electrolyte.

The battery can further comprise a separator, in particular when the electrolyte is a liquid electrolyte. The separator can be any separator known in the field.

The present invention further relates to methods of producing the anodes described hereinabove. The methods comprise an operation of providing an anode active substrate, optionally an operation of depositing a third lithium metal anode protective layer, an operation of depositing a first lithium metal anode protective layer, and optionally an operation of depositing a second lithium metal anode protective layer. The first, second, and third lithium metal anode protective layer are advantageously as described hereinabove.

First, an anode active substrate is provided, wherein the anode active substrate is as described hereinabove, for example and in particular comprising an anode current collector and a layer substantially consisting of lithium metal.

The first lithium metal anode protective layer is deposited on the anode active substrate or on the optional third lithium metal anode protective layer by means of simultaneous thermal evaporation of a first coating composition and thermal evaporation of a second coating composition. The first coating composition comprises or substantially consists of LiF. The second coating composition comprises or substantially consists of Lil.

Advantageously, the simultaneous thermal evaporation is performed under vacuum. To this end, the anode active substrate to be treated is placed in a reaction chamber, which is then brought to a pressure below atmospheric pressure. Advantageously, the thermal evaporation is performed at ultra-high vacuum, i.e. at a working pressure within the reaction chamber of at most 10⁻⁶ mbar.

Advantageously, the step of simultaneous thermal evaporation is performed after the provision of the anode active substrate without exposing the anode active substrate to the ambient atmosphere, for example by maintaining a vacuum. This avoids the exposure of the lithium to compounds such as oxygen and carbon dioxide, and avoids the formation of a native layer of impurities including one or more of carbonates, oxides, hydroxides and nitrides on the layer substantially consisting of lithium metal.

Advantageously, the anode active substrate is at room temperature during the simultaneous thermal evaporation.

The simultaneous thermal evaporation of the first and the second coating composition comprises heating the first coating composition to a first temperature to evaporate LiF, and heating the second coating composition to a second temperature to evaporate Lil. Advantageously, the coating compositions are continuously heated during the thermal evaporation so as to keep the evaporation of LiF and Lil going. Evaporated LiF and Lil then condense on the anode active substrate, thereby forming the first lithium metal anode protective layer. The first lithium metal anode protective layer thus comprises or substantially consists of LiF and Lil.

Advantageously, the first coating composition has a temperature between 600 °C and 800 °C, preferably between 650 °C and 750 °C, during the simultaneous thermal evaporation.

Advantageously, the second coating composition has a temperature between a temperature between 150 °C and 300 °C, preferably between 200 °C and 250 °C, during the simultaneous thermal evaporation.

Advantageously, the deposition rate ratio of the first coating composition to the second coating composition is between 1:10 and 20:1, preferably between 1:2 and 8:1.

The term "deposition rate" is used for the thickness of a coating composition deposited per second on the substate onto which the coating composition is to be deposited, for example the anode active substrate 2 (unit: Angstrom/s). The term "deposition rate ratio" is used for the ratio of the deposition rate of the first coating composition to the deposition rate of the second coating composition.

The deposition rate of a coating composition depends on the temperature thereof and of the evaporation or sublimation temperature of the Lil and/or LiF it comprises. As will be understood, a higher temperature will lead to a higher deposition rate. Consequently, the temperature of the first and the second coating composition are selected so as to match a predetermined deposition rate ratio.

Advantageously, the simultaneous thermal evaporation is conducted between 1 and 50 times, preferably between 5 and 30 times, more preferably between 10 and 20 times. In particular, the thermal evaporation is conducted so as to obtain a predetermined thickness of the first lithium metal anode protective layer. It will be understood that the number of "passes" or thermal evaporation cycles depends on the predetermined thickness to be obtained, as well as on the thickness deposited with each repetition.

Advantageously, when the anode is to comprise a second lithium metal anode protective layer comprising or substantially consisting of LiF or Lil, the method further comprises a step of thermal evaporation of a third coating composition comprising or substantially consisting of LiF or Lil, respectively, after the deposition of the first protective layer 3.

Advantageously, the thermal evaporation is performed under vacuum. To this end, the anode active substrate to be treated is placed in a reaction chamber, which is then brought to a pressure below atmospheric pressure. Advantageously, the anode active substrate is at room temperature during the thermal evaporation.

When the third coating composition comprises or substantially consists of LiF (i.e. without Lil), it has a temperature between 500 °C and 900 °C during the thermal evaporation thereof. When the third coating composition comprises or substantially consists of Lil (i.e. without LiF), it has a temperature between 150 °C and 400 °C during the thermal evaporation thereof.

Alternatively, yet advantageously, when the anode is to comprise a second lithium metal anode protective layer comprising or substantially consisting of LiF and Lil, the method further comprises a step of simultaneous thermal evaporation of a fourth coating composition comprising or substantially consisting of LiF and of a fifth coating composition comprising or substantially consisting of Lil, after the deposition of the first lithium metal anode protective layer 3.

The simultaneous thermal evaporation of the fourth and the fifth coating composition is advantageously as described hereinabove for the simultaneous thermal evaporation of the first and second coating composition.

Advantageously, when the anode is to comprises a third lithium metal anode protective layer comprising or substantially consisting of LiF or Lil, the method comprises a step of thermal evaporation of a sixth coating composition comprising or substantially consisting of LiF or Lil, respectively, prior to the deposition of the first lithium metal anode protective layer.

Advantageously, the thermal evaporation of the sixth coating composition comprising or substantially consisting of LiF or Lil is as described hereinabove for the thermal evaporation of the third coating composition.

Alternatively, yet advantageously, when the anode is to comprise a third lithium metal anode protective layer comprising or substantially consisting of LiF and Lil, the method comprises a step of simultaneous thermal evaporation of a seventh coating composition comprising or substantially consisting of LiF and of a eighth coating composition comprising or substantially consisting of Lil, prior to the deposition of the first lithium metal anode protective layer.

The simultaneous thermal evaporation of the seventh and the eighth coating composition is advantageously as described hereinabove for the simultaneous thermal evaporation of the first and second coating composition.

### Examples

### Example 1

An anode active substrate was prepared by cleaning a copper current collector with ethanol and drying it under vacuum overnight. Next, a 25 µm thick layer of lithium metal was deposited on the copper current collector by means of physical vapor deposition (PVD). The PVD system (MBraun) was integrated into an Ar-Glovebox (MBraun) to avoid any contamination. The H₂O and O₂ levels were kept below 0.1 ppm. The lithium metal deposition was controlled using a quartz crystal controller (Inficon GmbH) and a quartz microbalance crystal sensor. The copper current collector was fixed on a rotating glass substrate and the chamber was depressurized to 10⁻⁷ bar. A stainless-steel source crucible was filled with lithium metal rods (Sigma Aldrich, 99.9% purity) to deposit a 25 µm thick layer of lithium metal.

Next, 6 different anodes were prepared using the anode active substrate, each with a 200 nm thick LiF and Lil comprising lithium metal anode protective layer. Each protective layer was deposited by simultaneous thermal evaporation of a LiF comprising coating composition (Sigma Aldrich, 99.99% purity, using an alumina crucible) and a Lil comprising coating composition (Sigma Aldrich, 99.999% purity, using a stainless steel crucible) at different deposition rates ratios. The deposition rate ratio was varied by varying the temperatures of the coating compositions during thermal evaporation. Table 1 summarizes the LiF:LiI deposition rate ratios and the resulting fluoride to iodide weight ratio of the protective layers

**Table 1: LiF: Lil deposition rate ratios and resulting F:I weight ratios**

| **Anode No.** | **LiF:LiI deposition rate ratio** | **F:I weight ratio** |
|---|---|---|
| 1 | 1:2 | 14.9:85.1 |
| 2 | 1:1 | 24.3 : 75.7 |
| 3 | 2:1 | 38.7 : 61.3 |
| 4 | 3:1 | 45.2 : 54.8 |
| 5 | 5:1 | 53.1 : 46.9 |
| 6 | 8:1 | 68.2 : 31.8 |

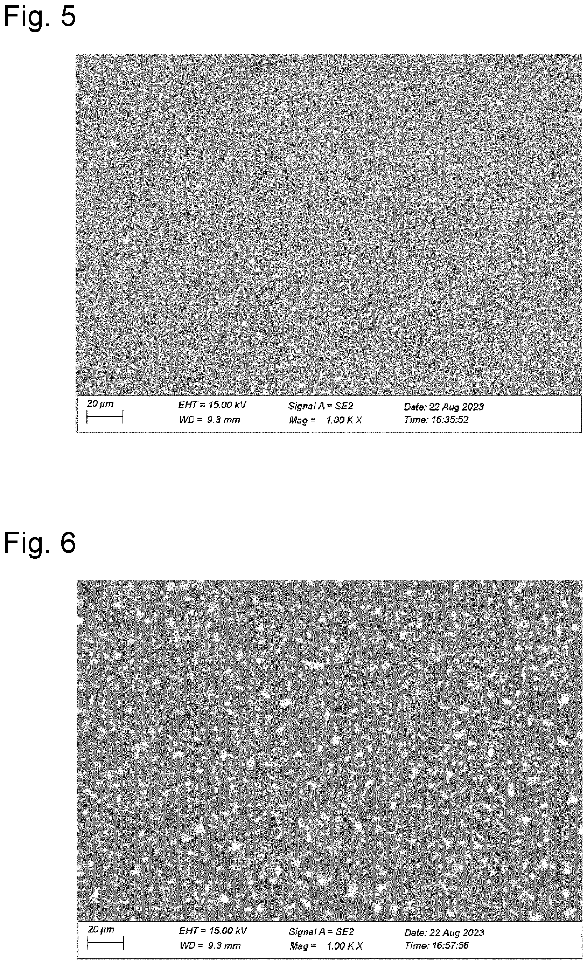

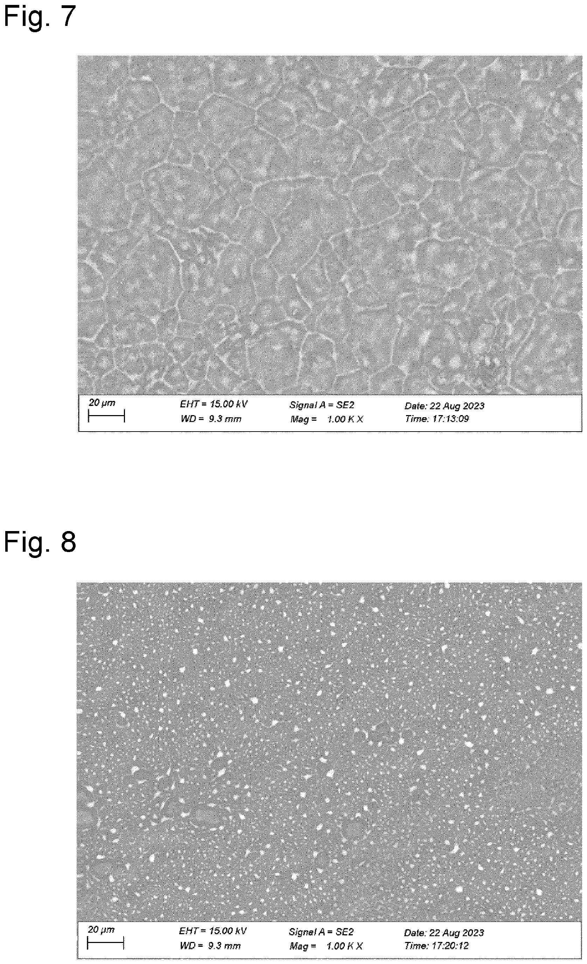

Figs. 5 to 8 show SEM images of the surface of the protective layer of anodes Nos. 1, 3, 5 and 6, respectively. It is clear from the SEM images that the LiF-LiI co-deposited layer (i.e. obtained by simultaneous thermal evaporation of LiF and Lil) has a granular microstructure, wherein the grains (grey areas) are LiF and the lighter spots are Lil.

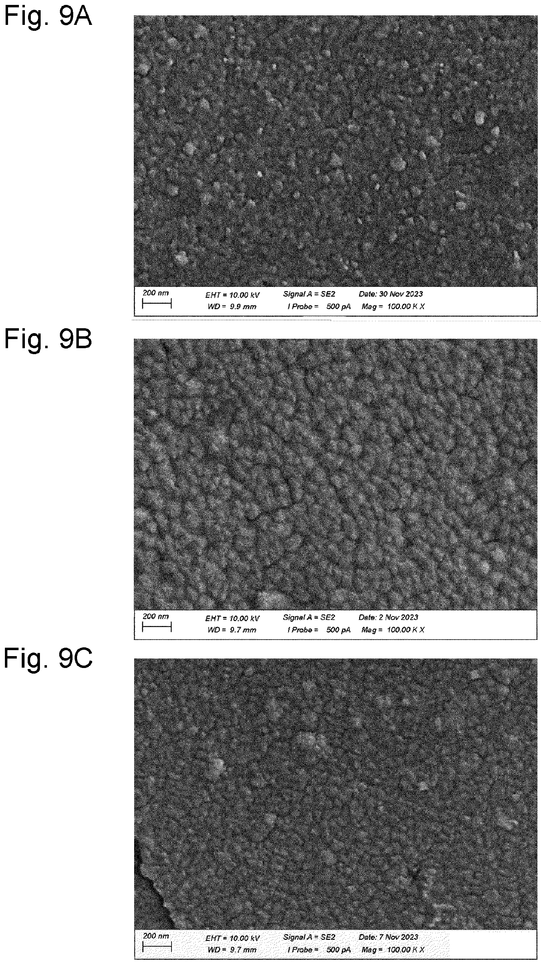

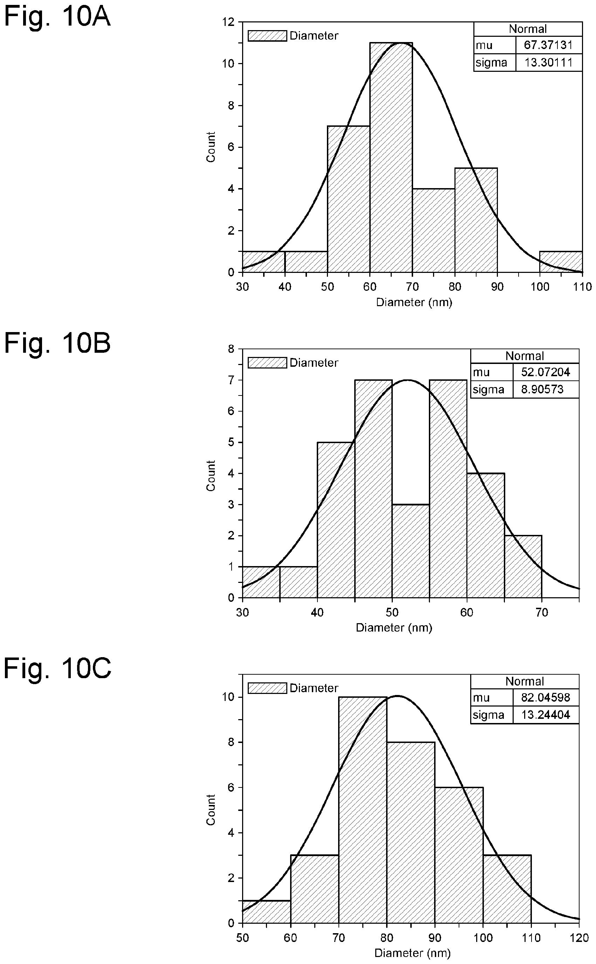

In order to further analyse the microstructure, the anodes Nos. 3, 5 and 6 were immersed for a duration between 1 minute and 2 hours in dimethoxyethane (DME) as organic solvent at room temperature to simulate and evaluate the dissolution of Lil in an electrolyte, and thus its leaching from the protective layer. Figs. 9A, 9B and 9C show the SEM image of the surface of anodes Nos. 3, 6 and 5 after immersion in DME for 20 minutes at room temperature. A clear microstructure is visible, showing smaller grains for the anodes obtained at deposition rate ratios 2:1 (Fig. 9A) and 5:1 (Fig. 9C). For anodes Nos. 3, 5 and 6 the particle size distribution of the LiF grains after immersion was determined as well. Figs. 10A, 10B and 10C show the particle size distribution of the anodes Nos. 3, 5 and 6, respectively. Anode No. 3 has an average particle size of 67 nm, whereas the average particle size of anodes Nos. 4 and 5 was 52 nm and 82 nm, respectively.

### Example 2

A pouch cell was assembled inside a dry room with dewpoint between -55 °C and -64 °C, using anode No. 4 of Example 1 as anode, having a surface area of 7.56 cm². As cathode, a LiFePO4 (LFP) standard cathode with load 13 mg/cm², cell capacity 14 mAh and a surface area of 6.40 cm² was used. 60 µm of ether-based electrolyte containing lithium bis(fluorosulfonyl)imide (LiFSI) salt was used as electrolyte. A 16 µm Teijin separator was also used in the pouch cell.

Further, 3 reference pouch cells were also prepared having as anode the anode active substrate of Example 1 without any protective layer (Reference 1), with a 200 nm LiF protective layer (Reference 2), and with a 1000 nm Lil protective layer (Reference 3). The cathode, electrolyte and separator were the same as used in the pouch cell with anode No. 4.

All 4 pouch cells were tested for repeating charging/discharging with a C/3 charge and 1C discharge protocol. The cyclic testing was performed at ambient conditions and without applied external pressure, using a NEWARE Battery Testing System.

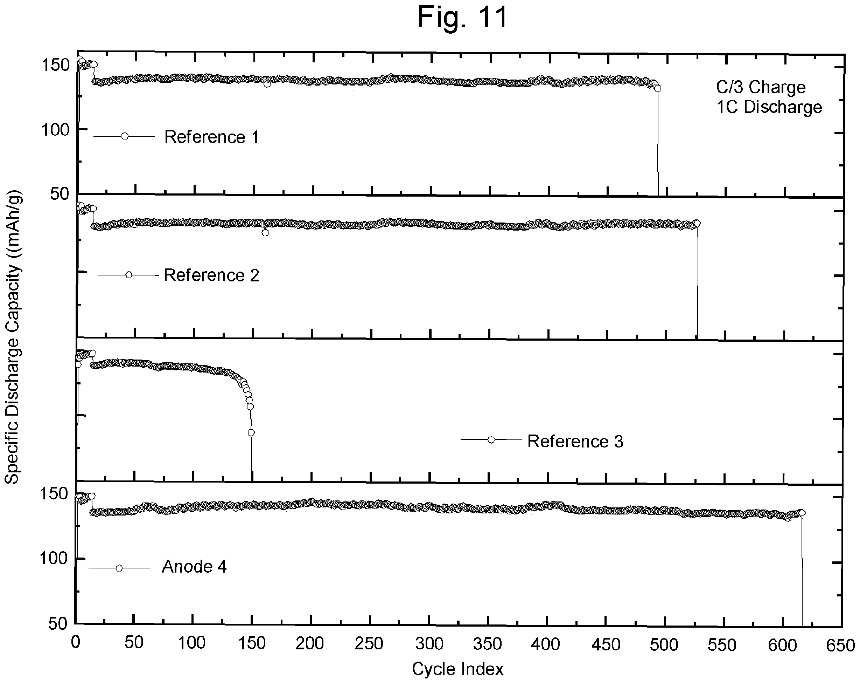

Fig. 11 shows the specific discharge capacity in function of the number of charging/discharging cycles. Without any protective layer, the anode and thus the battery were stable up to almost 500 cycles (Reference 1), whereas Reference 2 (200 nm LiF) was stable up to 550 cycles and Reference 3 (1000 nm LiI) only up to 150 cycles. However, the inventive pouch cell with anode No. 4 was stable for almost 650 cycles, clearly outperforming all 3 reference batteries.

### Example 3

In addition to the pouch cell with anode No. 4 of Example 1, and the pouch cell with an anode without any protective layer (Reference 1), pouch cells were also prepared with anodes Nos. 1, 2, 3, 5 and 6 of Example 1. They were prepared in the same way as described in Example 2, with the same cathode, electrolyte and pouch cell.

The reference pouch cell and the 6 inventive pouch cells were tested for repeating charging/discharging with a C/2 charge and 1C discharge protocol. The cyclic testing was performed at ambient conditions and without applied external pressure, using a NEWARE Battery Testing System.

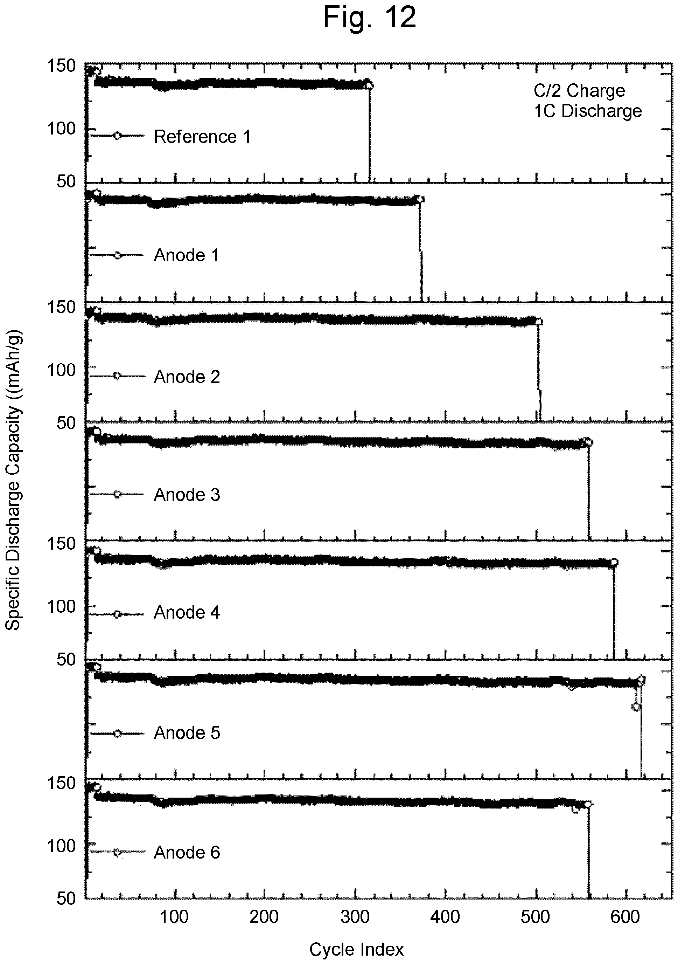

Fig. 12 shows the specific discharge capacity in function of the number of charging/discharging cycles. Without any protective layer, the anode and thus the battery were stable up to almost 320 cycles (Reference 1), whereas all inventive battery cells clearly outperformed the reference battery cell by being stable for at least 370 cycles (cfr. Anode No. 1). The best performing pouch cell was the one with anode No. 5 (deposition rate ratio LiF:Lil 5:1), which was stable up to almost 620 cycles.

### Nomenclature

- 1.: Lithium metal anode
- 2.: Anode active substrate
- 3.: First lithium metal anode protective layer
- 4.: Surface of anode current collector
- 5.: Second lithium metal anode protective layer
- 6.: Third lithium metal anode protective layer
- 7.: Anode current collector
- 8.: Layer comprising lithium metal
- 10.: Lithium metal anode
- 11.: Lithium metal anode
- 12.: Lithium metal anode

## Claims

1. A lithium metal anode (1, 10, 11, 12) for a battery, comprising an anode active substrate (2) comprising an anode current collector (7) and a layer (8) substantially consisting of lithium metal provided on a surface (4) of the anode current collector (7), and a first lithium metal anode protective layer (3) provided on the layer (8) substantially consisting of lithium metal, **characterized in that** the first lithium metal anode protective layer (3) comprises lithium iodide (Lil) and lithium fluoride (LiF).

2. The lithium metal anode (1, 10, 11, 12) according to claim 1, wherein the weight ratio of fluoride to iodide in the first lithium metal anode protective layer (3) is between 10:90 and 90:10, preferably between 30:70 and 70:30.

3. The lithium metal anode (1, 10, 11, 12) according to any one of the preceding claims, wherein the thickness of the first lithium metal anode protective layer (3) is between 50 nm and 1000 nm, preferably between 100 nm and 500 nm.

4. The lithium metal anode (1, 10, 11, 12) according to any one of the preceding claims, comprising a matrix comprising LiF, wherein at least a portion of Lil is dispersed in the matrix.

5. The lithium metal anode (1, 10, 11, 12) according to claim 4, wherein the matrix comprises grains comprising LiF, wherein the grains have an average diameter between 10 nm and 500 nm, preferably between 30 nm and 200 nm, as measured by scanning electron microscopy (SEM).

6. The lithium metal anode (1, 10, 11, 12) according to claim 5, wherein Lil is at least partially present on the surface of the grains of LiF.

7. The lithium metal anode (10, 11, 12) according to any one of the preceding claims, wherein the lithium metal anode (10, 11, 12) comprises a further lithium metal anode protective layer (5, 6) provided on the first lithium metal anode protective layer (3) and/or between the first lithium metal anode protective layer (3) and the layer (8) substantially consisting of lithium metal, wherein the further protective layer (5, 6) comprises Lil and/or LiF.

8. A lithium-ion battery comprising a lithium metal anode (1, 10, 11, 12) according to any one of the preceding claims.

9. The lithium-ion battery according to claim 8, being a secondary battery.

10. A method of producing a lithium metal anode (1, 10, 11, 12) comprising depositing a first lithium metal anode protective layer (3) on a layer (8) of an anode active substrate (2), wherein the layer (8) substantially consists of lithium metal, by means of simultaneous thermal evaporation of a first coating composition and a second coating composition, thereby obtaining the anode (1, 10, 11, 12), **characterized in that** the first coating composition comprises LiF and the second coating composition comprises LiI.

11. The method according to claim 10, wherein the deposition rate ratio of the first coating composition to the second coating composition is between 1:10 and 20:1, preferably between 1:5 and 10:1.

12. The method according to any one of claims 10 to 11, wherein the first coating composition has a temperature between 600 °C and 800 °C, preferably between 650 °C and 750 °C during the simultaneous thermal evaporation.

13. The method according to any one of claims 10 to 12, wherein the second coating composition has a temperature between 150 °C and 300 °C, preferably between 200 °C and 250 °C during the simultaneous thermal evaporation.

14. The method according to any one of claims 10 to 13, wherein the anode active substrate (2) is provided by depositing a layer (8) substantially consisting of lithium metal on a surface (4) of an anode current collector (7) by means of one or more of pulsed laser deposition, vapour deposition and radio frequency sputtering.

15. The method according to any one of claims 10 to 14, further comprising depositing a further lithium metal anode protective layer (5, 6) on the layer (8) substantially consisting of lithium metal prior to depositing the first lithium metal anode protective layer (3) and/or on the first lithium metal anode protective layer (3) after depositing the first lithium metal anode protective layer (3) by thermal evaporation of a third coating composition comprising Lil or LiF and optionally simultaneously a fourth coating composition comprising LiF or Lil.
